# EUROPEAN PATENT APPLICATION

(11) **EP 4 621 475 A1**
(43) Date of publication of application: **24.09.2025**
(21) Application number: 23895028.1
(22) Date of filing: 22.11.2023
(51) Int. Cl.: G02B 27/01, G02B 27/00, G02B 5/10

(54) **VEHICLE IMAGING DEVICE THAT AVOIDS SUNLIGHT**

(30) Priority: 23.11.2022 KR 20220158640
(71) Applicant: LG Electronics Inc., Yeongdeungpo-gu Seoul 07336 (KR)
(72) Inventor: LEE, Kyoungil, Seoul 06772 (KR); LEE, Sangil, Seoul 06772 (KR); KIM, Doohee, Seoul 06772 (KR); KWON, Yunyoung, Seoul 06772 (KR)
(74) Representative: Schornack, Oliver
(86) International application number: PCT/KR2023/018895
(87) International publication number: WO 2024/112101

(57) **Abstract**

A vehicle imaging device comprises: an image forming unit (PGU) which is disposed inside a dashboard of a vehicle and forms an optical signal on one side; a concave mirror disposed apart from the PGU so as to transmit the optical signal; a polarizing film disposed on at least one side of the concave mirror to selectively transmit or reflect the optical signal depending on a polarization component of the optical signal; and a diffuser area which is disposed apart from the concave mirror to display an image of the optical signal transmitted through the concave mirror, and has a surface formed thereon so that sunlight flowing into the dashboard is reflected in various directions and absorbed within the dashboard.

## Description

### Technical Field

This specification relates to a vehicle imaging device. One or more embodiments relate to a vehicle imaging device that avoids sunlight.

### Background Art

A vehicle is an apparatus that moves in a direction desired by a user riding therein. A representative example of a vehicle may be an automobile.

For convenience of a user using a vehicle, various types of sensors and electronic devices are arranged in the vehicle. In particular, for the convenience of the user's driving, research on an advanced driver assistance system (ADAS) is being actively carried out. Furthermore, development of an autonomous vehicle is being actively carried out.

In some embodiments, a vehicle display that shows various driving information of the vehicle is located below a driver's forward visual field for driving, which affects driving safety, a phenomenon known as rubbernecking. Therefore, a vehicle imaging device, such as a head-up display (HUD), may be mounted on a vehicle to enhance driving safety by projecting an image on a windshield at the front of the vehicle, positioned close to the driver's line of sight while driving.

There is a need for a vehicle imaging device that is capable of displaying driving-related information in a front region of a driver's seat of the vehicle or provide personal entertainment content in a front region of a passenger or rear seat of the vehicle.

In some embodiments, while a vehicle imaging device outputs optical signals to a windshield to display images, sunlight of the sun around the vehicle imaging device must be directed to outside of a field of view of an occupant in the vehicle. Therefore, to avoid direct and reflected sunlight, it is necessary to change a path of sunlight to the outside of the occupant's field of view through a reflective structure inside the vehicle. In this regard, the reflective structure inside the vehicle may be implemented in a curved shape, considering the movement path of the sun and the shape of the windshield. However, there is a problem in that this curved reflective structure increases the height of an overall structure.

In some embodiments, large-screen AR-HUDs using mirrors have defects, such as glare to a driver from sunlight and thermal damage to a liquid crystal display. In the case of an HUD in which a reflective structure has a small volume while reducing the height of the overall structure, there is a problem that it is very difficult to avoid visual field defects caused by sunlight due to narrow gaps between components.

### Disclosure of Invention

### Technical Problem

One aspect of the specification is to provide a vehicle imaging device that is designed to avoid sunlight in a driver's field of view while reducing a volume, and a vehicle including the same.

Another aspect of the specification is to avoid visual field defects caused by sunlight in an HUD structure which has a small volume while reducing the height of an overall structure.

Another aspect of the specification is to avoid thermal damage to a display and driver's glare caused by back-reflected light by defocusing the back-reflection of sunlight.

Another aspect of the specification is to provide a customized design of a vehicle imaging device according to a limited space inside the vehicle based on avoidance of visual field defects caused by sunlight.

The tasks to be solved in the disclosure may not be limited to the aforementioned, and other problems to be solved by the disclosure will be obviously understood by a person skilled in the art based on the following description.

### Solution to Problem

To achieve the aspects and other advantages of the specification, there is provided a vehicle imaging device including: a picture generation unit (PGU) arranged inside a dashboard of a vehicle and configured to generate an optical signal to one side; a concave mirror arranged spaced apart from the PGU to transmit the optical signal; a polarizing film arranged on at least one surface of the concave mirror and configured to selectively transmit or reflect the optical signal according to a polarization component of the optical signal; and a diffuser region arranged spaced apart from the concave mirror to display an image of the optical signal transmitted through the concave mirror, and having a surface formed thereon such that sunlight introduced into the dashboard is reflected in various directions and absorbed inside the dashboard.

According to an embodiment, the vehicle imaging device may further include a cover forming appearance of the dashboard and configured to transmit an optical signal reflected from the diffuser region and the concave mirror.

According to an embodiment, the vehicle imaging device may further include a phase retarder arranged on a front surface of the diffuser region and configured to retard a phase of the polarization component of the optical signal.

According to an embodiment, the concave mirror to which the polarizing film is attached may transmit the optical signal generated in the PGU, and an optical signal reflected through the phase retarder and a screen of the diffuser region may be reflected from the concave mirror to be steered to a specific region of a windshield of the vehicle.

According to an embodiment, the PGU may be arranged at an inclination angle smaller than 90 degrees with respect to a horizontal plane, and the concave mirror may be arranged at a first inclination angle greater than 90 degrees with respect to the horizontal plane.

According to an embodiment, the PGU may be formed with a first length on a plane corresponding to the inclination angle, the concave mirror may be formed with a second length on a plane corresponding to the first inclination angle, and the second length of the concave mirror may be greater than the first length of the PGU.

According to an embodiment, the diffuser region may be arranged at a second inclination angle greater than 90 degrees with respect to the horizontal plane, the diffuser region may be formed with a third length on a plane corresponding to the second inclination angle, the second inclination angle of the diffuser region may be greater than the inclination angle of the PGU and smaller than the first inclination angle of the concave mirror, and the third length of the diffuser region may be greater than the first length of the PGU and smaller than the second length of the concave mirror.

According to an embodiment, the vehicle imaging device may further include a motor coupled to a rear surface of the diffuser region and configured to adjust the second inclination angle of the diffuser region.

According to an embodiment, the cover may be arranged between a first point and a second point on a front surface of the dashboard, the PGU may be arranged in a first region where the cover is not arranged, the concave mirror may be arranged adjacent to the first point of the cover, and the diffuser region may be arranged spaced apart by a certain distance from the second point of the cover toward an inside of the dashboard.

According to an embodiment, the PGU and the concave mirror may be arranged spaced apart from each other by a first distance, which is a shortest distance of an optical path, and a second distance, which is a longest distance of an optical path, the concave mirror and the diffuser region may be arranged spaced apart from each other by a third distance, which is a shortest distance of an optical path, and a fourth distance, which is a longest distance of an optical path, and values may increase in the order of the first distance, the second distance, the third distance, and the fourth distance.

According to another embodiment of the specification, a vehicle imaging device includes: a picture generation unit (PGU) arranged inside a dashboard of a vehicle and configured to generate an optical signal to one side; a diffuser region arranged spaced apart from the concave mirror to display an image of the optical signal generated in the PGU, and having a surface formed thereon such that sunlight introduced into the dashboard is reflected in various directions and absorbed inside the dashboard; a cover forming appearance of the dashboard and configured to transmit the optical signal reflected from the diffusion region; a polarizing film arranged on at least one surface of the cover; and a concave mirror arranged above the cover and configured to reflect an optical signal transmitted through first and second surfaces of the cover. The optical signal reflected from the concave mirror may be reflected from the first surface of the cover to be steered to a specific region of a windshield of the vehicle.

According to an embodiment, the vehicle imaging device may further include a phase retarder arranged on a front surface of the concave mirror and configured to retard a phase of a polarization component of the optical signal.

According to an embodiment, the cover to which the polarizing film is attached may transmit an optical signal of a first polarization component which is generated in the PGU and reflected from the diffuser region, and an optical signal of a second polarization component reflected through the phase retarder and the concave mirror may be reflected from the polarizing film arranged on the first surface of the cover.

According to an embodiment, the PGU may be arranged at an inclination angle greater than 90 degrees with respect to a horizontal plane, and the diffuser region may be arranged at a first inclination angle smaller than 90 degrees with respect to the horizontal plane.

According to an embodiment, the PGU may be formed with a first length on a plane corresponding to the inclination angle, the diffuser region may be formed with a second length on a plane corresponding to the first inclination angle, and the second length of the diffuser region may be greater than the first length of the PGU.

According to an embodiment, the concave mirror may be arranged at a second inclination angle smaller than 90 degrees with respect to the horizontal plane, the concave mirror may be formed with a third length on a plane corresponding to the second inclination angle, the second inclination angle of the concave mirror may be smaller than the inclination angle of the PGU and greater than the first inclination angle of the diffuser region, and a length of a collection region of the diffuser region may be greater than the first length of the PGU and smaller than the third length of the concave mirror.

According to an embodiment, the vehicle imaging device may further include a motor coupled to a rear surface of the diffuser region and configured to adjust the first inclination angle of the diffuser region.

According to an embodiment, the cover may be arranged between a first point and a second point on a front surface of the dashboard, the diffuser region may be arranged between a third point and a fourth point on a rear surface of the dashboard, the PGU may be arranged between the cover and the diffuser region inside the cover, the concave mirror may be arranged between a fifth point and a sixth point in an upper region of the dashboard, the fifth point of the concave mirror may be arranged closer to a bottom of the windshield than the first point, and the sixth point of the concave mirror may be arranged between the first point and the second point.

According to an embodiment, the PGU and the diffuser region may be arranged spaced apart from each other by a first distance, which is a shortest distance of an optical path, and a second distance, which is a longest distance of an optical path, the diffuser region and the concave mirror may be arranged spaced apart from each other by a third distance, which is a shortest distance of an optical path, and a fourth distance, which is a longest distance of an optical path, and values may increase in the order of the first distance, the second distance, the third distance, and the fourth distance.

Details of other embodiments are included in the detailed description and drawings.

### Advantageous Effects of Invention

The technical features of a vehicle imaging device having a reduced volume and a vehicle including the same according to the specification will be summarized as follows.

According to the specification, a vehicle imaging device with a reduced volume may be implemented by optimally arranging a picture generation unit (PGU) and a mirror inside a cover of a dashboard and optimally arranging a second mirror outside the cover.

According to the specification, a vehicle imaging device that guarantees a field of view (FOV) of at least a certain angle with a reduced volume according to a limited mounting space of a large-screen AR-HUD may be implemented by configuring a cover to reflect or transmit an optical signal.

According to the specification, a vehicle imaging device that ensures a field of view (FOV) of at least a certain angle while having a reduced volume according to a limited mounting space of a large-screen AR-HUD may be implemented by attaching a polarizing film to at least one surface of a cover.

According to the specification, a vehicle imaging device may be implemented that provides different AR images within a user's FOV by reflecting the different AR images through different regions of a windshield using a plurality of mirrors.

According to the specification, a vehicle imaging device may be implemented such that continuous images associated with driving-related information have a large aspect ratio by using a single image module.

According to the specification, a volume reduction effect may be maximized through a multi-selective reflection/transmission optical system using a cover which is used for suppressing an introduction of foreign substances.

According to the specification, the degree of freedom in volume occupied by mirrors when the mirrors are installed inside a vehicle may be secured as a height from the bottom of a first mirror to the top of a second mirror is reduced.

According to the specification, a vehicle imaging device that has a volume reduction effect of at least 40% compared to large-screen AR-HUDs on the market may be implemented.

According to the specification, a vehicle imaging device that may be implemented as an AR-HUD having a volume of about 9 L or less within a vehicle may be provided.

The effects of the disclosure are not limited to those effects mentioned above, and other effects not mentioned may be clearly understood by those skilled in the art from the description of the appended claims.

### Brief Description of Drawings

FIG. 1 is a view illustrating appearance of a vehicle according to an embodiment.
FIG. 2 is a diagram of the appearance of the vehicle at various angles.
FIGS. 3 and 4 are diagrams of the interior of a vehicle according to an embodiment.
FIG. 5 is a block diagram of a vehicle according to an embodiment.
FIG. 6A is a view of a configuration in which a screen of a certain ratio is formed in a specific region of front glass of a vehicle.
FIG. 6B is a view of a structure in which a vehicle imaging device for creating the screen of the certain ratio of FIG. 6A is arranged inside a dashboard of the vehicle.
FIG. 7 is a view of a vehicle imaging device according to an embodiment.
FIG. 8 is a view of a structure of defusing sunlight incident on a diffuser screen of the vehicle imaging device of FIG. 7.
FIG. 9 is a view of a structure in which an optical signal is reflected and transmitted through a specific region of a windshield in the vehicle imaging device of FIG. 7.
FIG. 10 is a view of the shortest and longest distances of optical paths between different arrangement structures in the structure in which optical signals are transmitted in FIG. 9.
FIG. 11 is a view of polarization components in a polarizing film attached to a concave mirror of FIG. 7 and a phase retarder attached to a screen in a diffuser region.
FIG. 12 is a view of a vehicle imaging device according to another embodiment.
FIG. 13 is a view of a structure in which an optical signal is reflected and transmitted through a specific region of a windshield in the vehicle imaging device of FIG. 12.
FIG. 14 is a view of polarization components in a polarizing film attached to a cover of FIG. 12 and a phase retarder attached to a concave mirror.
FIG. 15 is a block diagram of a vehicle having a vehicle imaging device according to the specification.

### Mode for the Invention

Description will now be given in detail according to one or more embodiments disclosed herein, with reference to the accompanying drawings. For the sake of brief description with reference to the drawings, the same or equivalent components may be provided with the same or similar reference numbers, and description thereof will not be repeated. The terms "module" and "unit" as used herein interchangeably or individually used to refer to a constituent element only for convenience in description in the specification and therefore are not themselves intended to take on different meanings or to depict different functions. In describing the embodiments disclosed herein, moreover, a detailed description of a related well-known technology will be omitted when it is determined that it would obscure the gist of the present disclosure. The accompanying drawings are used to help easily understand the technical idea of the disclosure and it should be understood that the idea of the disclosure is not limited by the accompanying drawings. The idea of the disclosure should be construed to extend to any alterations, equivalents and substitutes besides the accompanying drawings.

The terms including an ordinal number such as first, second, and the like may be used to describe various elements, but the elements should not be limited by those terms. The terms are used merely for the purpose of distinguishing one element from another.

It will be understood that when an element is referred to as being "connected with" another element, the element may be connected with the another element or intervening elements may also be present. In contrast, when a component is referred to as being "directly connected to" or "directly coupled to" another component, it should be understood that there are no intervening components present.

As used herein, the singular form is intended to include the plural forms as well, unless context clearly indicates otherwise.

Terms such as "include" or "has" are used herein and should be understood that they are intended to indicate an existence of several components, functions or steps, disclosed in the specification, and it is also understood that greater or fewer components, functions, or steps may likewise be utilized.

A vehicle according to an embodiment may be understood as a conception including cars, motorcycles, and the like. Hereinafter, the vehicle will be described based on a car.

A vehicle according to an embodiment may be a conception including all of an internal combustion engine car having an engine as a power source, a hybrid vehicle having an engine and an electric motor as power sources, an electric vehicle having an electric motor as a power source, and the like.

In the following description, a left side of a vehicle refers to a left side in a driving direction of the vehicle, and a right side of the vehicle refers to a right side in the driving direction.

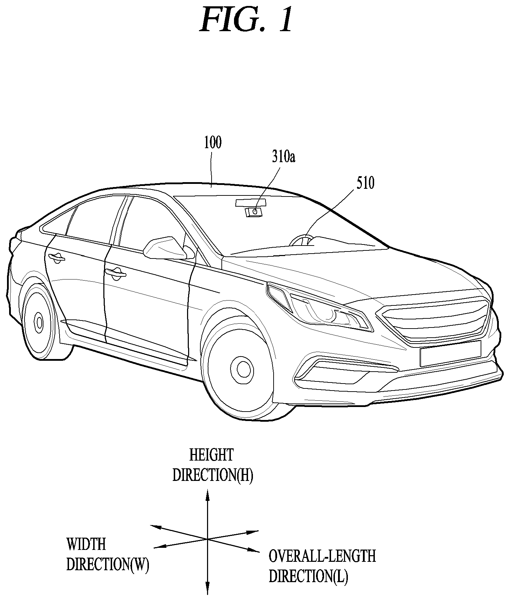

FIG. 1 is a view illustrating appearance of a vehicle according to an embodiment.

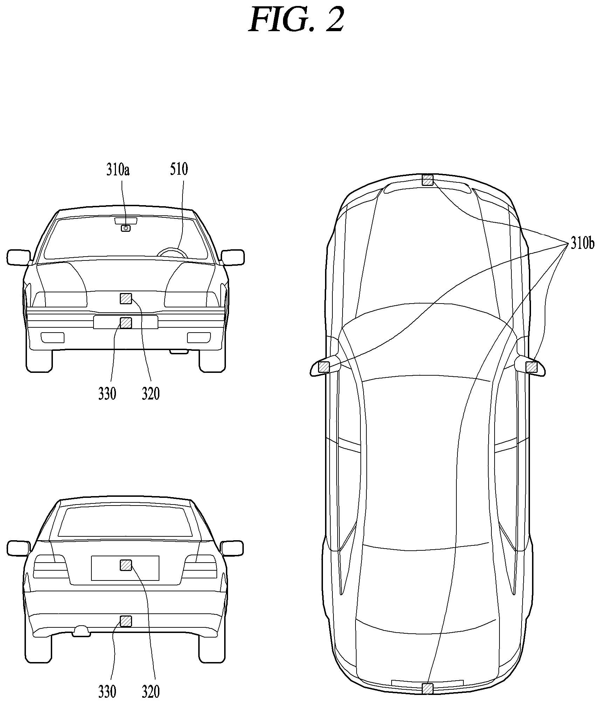

FIG. 2 is a diagram illustrating the appearance of the vehicle at various angles.

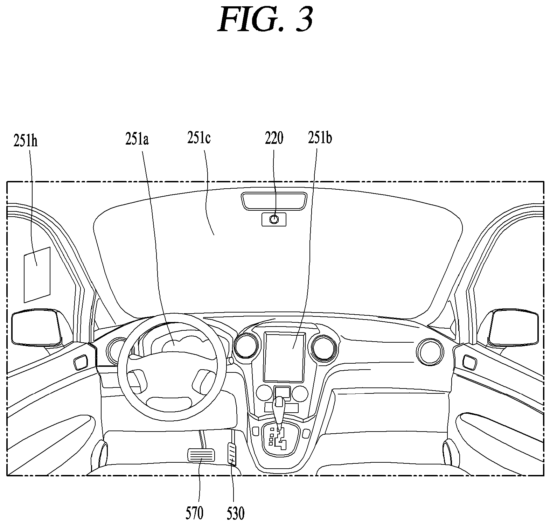

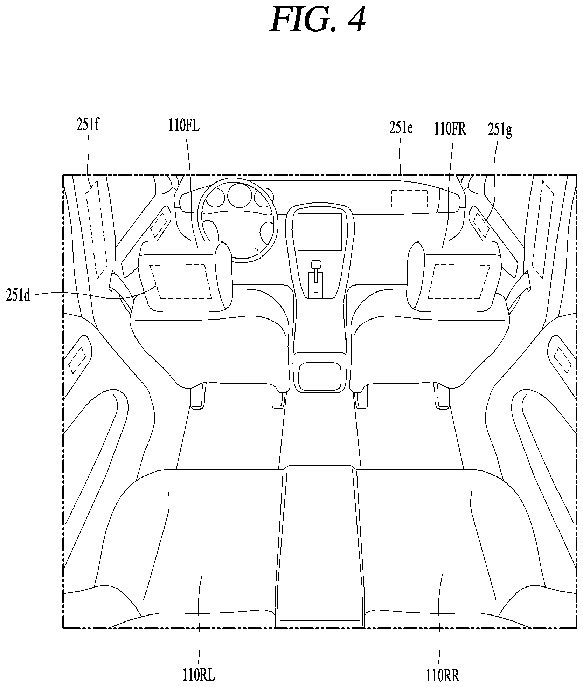

FIGS. 3 and 4 are diagrams illustrating an inside of a vehicle according to an embodiment.

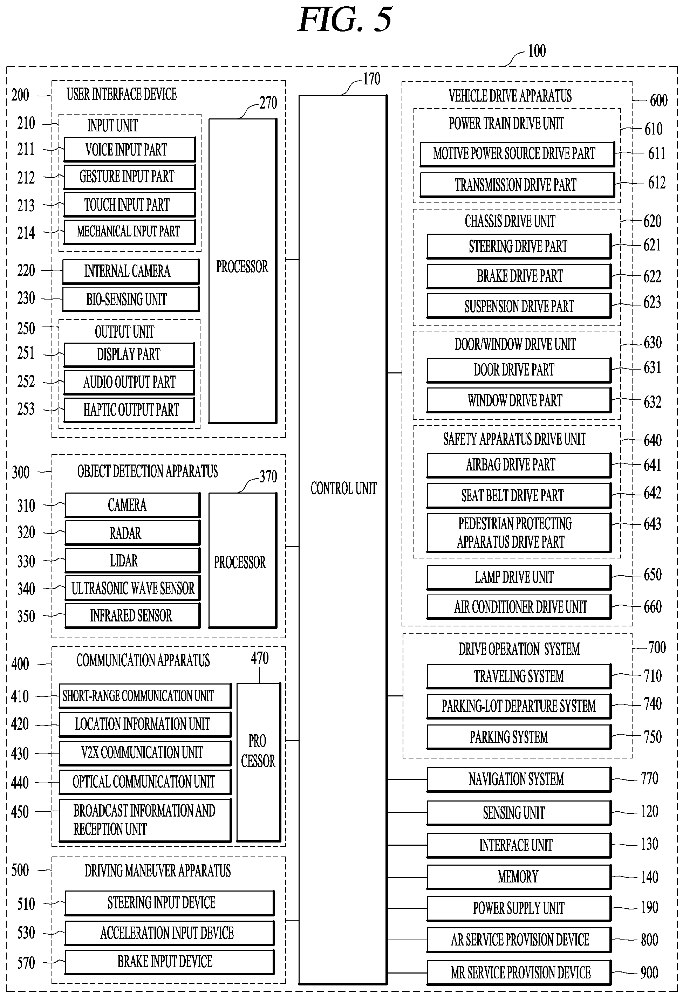

FIG. 5 is a block diagram illustrating a vehicle according to an embodiment.

As illustrated in FIGS. 1 to 5, a vehicle 100 may include wheels rotating by a power source, and a steering input apparatus 510 for adjusting a driving (ongoing, moving) direction of the vehicle 100.

The vehicle 100 may be an autonomous vehicle.

The vehicle 100 may be switched into an autonomous mode or a manual mode based on a user input.

For example, the vehicle 100 may be converted from the manual mode into the autonomous mode or from the autonomous mode into the manual mode based on a user input received through a user interface device 200.

The vehicle 100 may be switched into the autonomous mode or the manual mode based on traveling situation information. The traveling situation information may be generated based on object information provided from an object detection device 300.

For example, the vehicle 100 may be switched from the manual mode into the autonomous mode or from the autonomous module into the manual mode based on driving environment information generated in the object detection device 300.

In an example, the vehicle 100 may be switched from the manual mode into the autonomous mode or from the autonomous mode into the manual mode based on driving environment information received through a communication device 400.

The vehicle 100 may switch from the manual mode into the autonomous mode or from the autonomous module into the manual mode based on information, data, or signal provided by an external device.

When the vehicle 100 is driven in the autonomous mode, the vehicle 100 may be driven based on a driving system 700.

For example, the autonomous vehicle 100 may be driven based on information, data, or signals that are generated by a traveling system 710, a parking-lot departure system 740, and a parking system 750.

When the vehicle 100 is driven in the manual mode, the autonomous vehicle 100 may receive a user input for driving through a driving operation device 500. The vehicle 100 may be driven based on the user input received through the driving operation device 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which serves as a reference for measuring the overall length of the vehicle 100, a width direction W may refer to a direction that serves as a reference for measuring the width of the vehicle 100, and a height direction H may refer to a direction that serves as a reference for measuring the height of the vehicle 100.

As illustrated in FIG. 5, the vehicle 100 may include a user interface device 200, an object detection device 300, a communication device 400, a driving operation device 500, a vehicle drive device 600, a driving system 700, a navigation system 770, a sensing unit 120, an interface unit 130, a memory 140, a controller 170, and a power supply unit 190.

According to embodiments, the vehicle 100 may include more components in addition to components to be explained in this specification or may not include some of those components to be explained in this specification.

The user interface device 200 is an apparatus for communication between the vehicle 100 and a user. The user interface device 200 may receive a user input and provide information generated in the vehicle 100 to the user. The vehicle 100 may implement user interfaces (UIs) or user experiences (UXs) through the user interface device 200.

The user interface device 200 may include an input unit 210, an internal camera 220, a biometric sensing unit 230, an output unit 250 and a processor 270.

In some embodiments, the user interface device 200 may include more components in addition to components to be explained in this specification or may not include some of those components to be explained in this specification.

The input unit 200 may allow the user to input information. Data collected in the input unit 120 may be analyzed by the processor 270 and processed as a user's control command.

The input unit 200 may be disposed inside the vehicle. For example, the input unit 200 may be arranged in one region of a steering wheel, one region of an instrument panel, one region of a seat, one region of each pillar, one region of a door, one region of a center console, one region of a headlining, one region of a sun visor, one region of a windshield, one region of a window, or the like.

The input unit 200 may include a voice input part 211, a gesture input part 212, a touch input part 213, and a mechanical input part 214.

The audio input part 211 may convert a user's voice input into an electric signal. The converted electric signal may be provided to the processor 270 or the controller 170.

The audio input module 211 may include at least one microphone.

The gesture input module 212 may convert a user's gesture input into an electric signal. The converted electric signal may be provided to the processor 270 or the controller 170.

The gesture input part 212 may include at least one of an infrared sensor and an image sensor for detecting the user's gesture input.

According to embodiments, the gesture input part 212 may detect a user's three-dimensional (3D) gesture input. To this end, the gesture input part 212 may include a light emitting diode emitting a plurality of infrared rays, or a plurality of image sensors.

The gesture input part 212 may detect the user's 3D gesture input by a time of flight (TOF) method, a structured light method or a disparity method.

The touch input part 213 may convert the user's touch input into an electric signal. The converted electric signal may be provided to the processor 270 or the controller 170

The touch input part 213 may include a touch sensor for detecting the user's touch input.

According to an embodiment, the touch input part 213 may be integrated with the display 251 so as to implement a touch screen. The touch screen may provide both an input interface and an output interface between the vehicle 100 and the user.

The mechanical input part 214 may include at least one of a button, a dome switch, a jog wheel, and a jog switch. An electric signal generated by the mechanical input part 214 may be provided to the processor 270 or the controller 170.

The mechanical input part 214 may be arranged on a steering wheel, a center fascia, a center console, a cockpit module, a door, and the like.

The internal camera 220 may acquire an image of the interior of the vehicle. The processor 270 may detect a user's status from the image of the interior of the vehicle. The processor 270 may acquire information related to the user's gaze from the image of the interior of the vehicle. The processor 270 may detect the user's gesture from the image of the interior of the vehicle.

The biometric sensing unit 230 may acquire the user's biometric information. The biometric sensing unit 230 may include a sensor for detecting the user's biometric information and acquire fingerprint information and heart rate information regarding the user using the sensor. The biometric information may be used for user authentication.

The output unit 250 may generate an output related to a visual, auditory, or tactile signal.

The output unit 250 may include at least one of a display 251, an audio output part 252, and a haptic output part 253.

The display 251 may output graphic objects corresponding to various types of information.

The display 251 may include at least one of a liquid crystal display (LCD), a thin film transistor-LCD (TFT LCD), an organic light-emitting diode (OLED), a flexible display, a three-dimensional (3D) display and an e-ink display.

The display 251 may be inter-layered or integrated with a touch input part 213 to implement a touch screen.

The display 251 may be implemented as a head up display (HUD), a center information display (CID), a cluster, and/or a rear seat entertainment (RSE). When the display 251 is implemented as the HUD, the display 251 may be provided with a projection module and thus output information through an image which is projected onto a windshield or a window.

The display 251 may include a transparent display. The transparent display may be attached to the windshield or the window.

The transparent display may have a predetermined degree of transparency and may output a predetermined screen thereon. The transparent display may include at least one of a thin film electroluminescent (TFEL), a transparent organic light-emitting diode (OLED), a transparent liquid crystal display (LCD), a transmissive transparent display, or a transparent LED display. The transparent display may have adjustable transparency.

In some examples, the user interface device 200 may include a plurality of display modules 251a to 251g.

The display 251 may be arranged in one region of the steering wheel, one region 521a, 251b, 251e of the instrument panel, one region 251d of the seat, one region 251f of each pillar, one region 251g of the door, one region of the center console, one region of the headlining, or one region of the sun visor, or implemented in one region 251c of the windshield or one region 251h of the window.

Driving-related information for a driver may be displayed in one region 251a, 251b of the instrument panel. A personal infotainment display may be implemented in one region 251e of the instrument panel by a vehicle imaging device for a passenger seated in a front passenger seat. A personal infotainment display may be implemented in one region 251d of the seat by a vehicle imaging device for rear seat entertainment (RSE).

The audio output part 252 may convert an electric signal provided by the processor 270 or the controller 170 into an audio signal and output the audio signal. To this end, the audio output part 252 may include at least one speaker.

The haptic output part 253 may generate a tactile output. For example, the haptic output part 253 may vibrate the steering wheel, a safety belt, a seat 110FL, 110FR, 110RL, 110RR such that the user may recognize such output.

The processor 270 may control an overall operation of each unit of the user interface device 200.

In some embodiments, the user interface device 200 may include a plurality of processors 270 or may not include any processor 270.

When the processor 270 is not included in the user interface device 200, the user interface device 200 may operate according to a control of a processor of another apparatus within the vehicle 100 or the controller 170.

In some examples, the user interface device 200 may be called as a display device for vehicle.

The user interface device 200 may operate according to the control of the controller 170.

The object detection device 300 is a device for detecting an object located at outside of the vehicle 100.

Examples of the object may include a variety of objects associated with driving (operation) of the vehicle 100.

In some embodiments, a vehicle imaging device according to this specification will be described. In some embodiments, a vehicle display that shows various driving information related to a vehicle may be located below a driver's forward visual field for driving, which affects driving safety (rubbernecking). Therefore, a vehicle imaging device, such as a head-up display (HUD), may be mounted on a vehicle to enhance driving safety by projecting an image on a windshield at the front of the vehicle, positioned close to the driver's line of sight while driving.

An infotainment device also needs to be installed in a passenger or rear seat of the vehicle to provide personal information and personal entertainment content. Therefore, there is a need for a vehicle imaging device that is capable of displaying driving-related information in a front region of a driver's seat of the vehicle or providing personal entertainment content in a front region of a passenger or rear seat of the vehicle.

To display such driving-related information or entertainment content in a specific region of the windshield at the front of the vehicle, the vehicle imaging device may need to have a large aspect ratio in which a width in one direction is a certain percentage greater than a length in another direction. However, there is a problem in that any position and any structure to provide the vehicle imaging device for constituting a screen with a large aspect ratio in the vehicle are not mentioned.

To solve these problems, an aspect of this specification is to provide a vehicle imaging device having a large aspect ratio using a projection optical system related to the vehicle. Another aspect of this specification is to display driving-related information on a screen having a large aspect ratio in a specific region of the windshield at the front of the vehicle. Still another aspect of this specification is to provide a vehicle imaging device having an optical structure and a special screen for allowing an image to have a large aspect ratio by using a single image module. Still another aspect of this specification is to implement continuous images related to driving-related information to have a large aspect ratio by using a single image module. Still another aspect of this specification is to provide a small and thin vehicle imaging device.

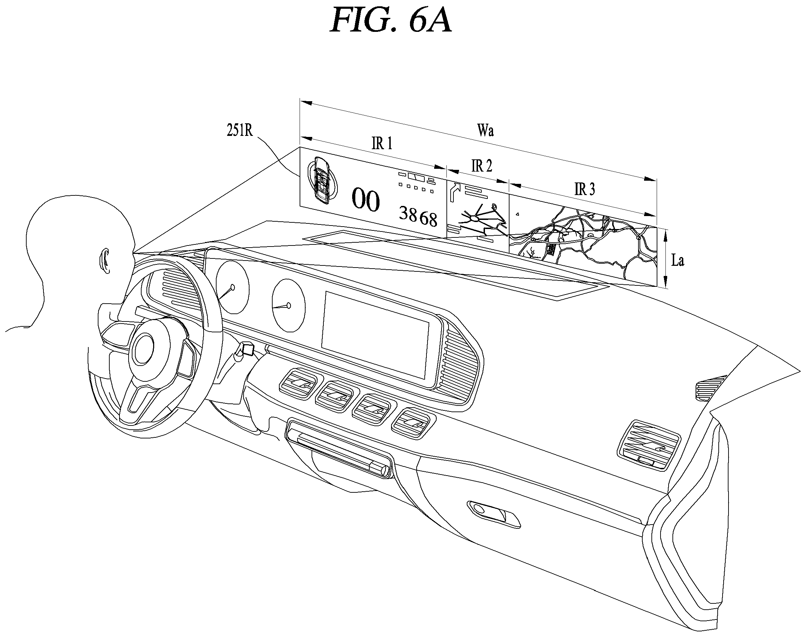

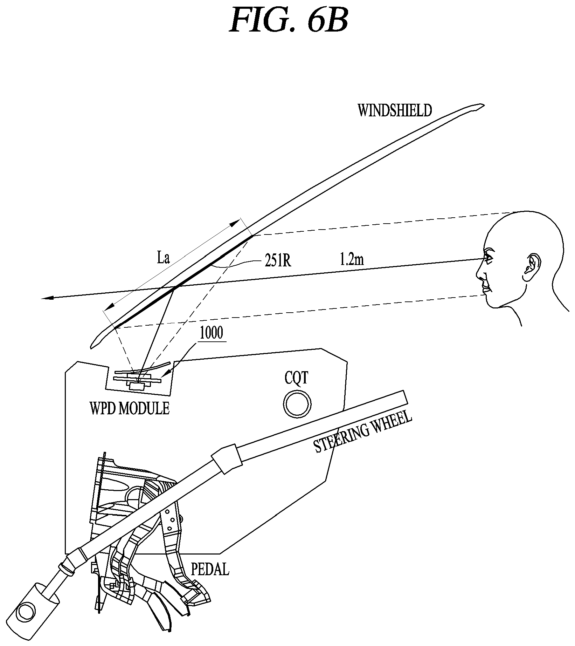

Hereinafter, a vehicle imaging device for achieving the aforementioned purposes will be described in detail with reference to the drawings. In this regard, FIG. 6A is a view of a configuration in which a screen of a certain ratio is formed in a specific region of front glass of a vehicle. FIG. 6B is a view of a structure in which a vehicle imaging device for creating the screen of the certain ratio of FIG. 6A is arranged inside a dashboard of the vehicle.

Referring to FIG. 6A, an image having a width Wa in one axial direction and a length La in another axial direction may be displayed in a specific region 251R of a windshield of a vehicle. The image may be configured to include a plurality of image regions displaying information necessary for driving the vehicle. The plurality of image regions may include a first image region IR1 to a third image region IR3. A first image including vehicle-related information may be displayed in the first image region IR1 closest to a driver's visual field range in the vehicle. A second image associated with a vehicle driving path may be displayed in the second image region IR2. A third image associated with a map including an origin and a destination may be displayed in the third image region IR3. As the plurality of images are displayed in the specific region 251R, the width Wa in the one axial direction may be set to be longer than the length La in the another axial direction by a certain ratio, for example, at least 5 times.

Referring to FIGS. 6A and 6B, a vehicle imaging device 1000 may be arranged inside the dashboard of the vehicle. The vehicle video device 1000 may be arranged in a specific region inside the dashboard not to overlap a region where a steering wheel and pedals are arranged. An image by light, which is reflected from a screen panel 1200 constituting the vehicle imaging device 1000, may be displayed in the specific region 251R of the windshield of the vehicle. The specific region 251R may be implemented with a certain length La so that the image is displayed in the driver's visual field range. A distance from a center of the driver's gaze to a center of the specific region 251R may be determined as a certain distance Da.

Hereinafter, a vehicle imaging device capable of avoiding sunlight according to this specification will be described. In some embodiments, a vehicle display that shows various driving information related to a vehicle may be located below a driver's forward visual field for driving, which affects driving safety (rubbernecking). Therefore, a vehicle imaging device, such as a head-up display (HUD), may be mounted on a vehicle to enhance driving safety by projecting an image on a windshield at the front of the vehicle, positioned close to the driver's line of sight while driving.

The HUD may be implemented with a large screen while using augmented reality (AR) to display driving-related information. Due to a limited mounting space of such a large-screen AR-HUD, a product with a reduced volume (10L or less) and a large screen (at least 10X4 degrees of FOV) may be required. However, there is a problem that it is difficult to implement a vehicle imaging device, such as AR-HUD, which has a reduced volume and avoids sunlight, in a product with a large screen of at least a certain size (at least 10X4 degrees of FOV).

To overcome those problems, one aspect of the specification is to provide a vehicle imaging device that is designed to avoid sunlight in a driver's field of view while reducing a volume, and a vehicle including the same. Another aspect of the specification is to avoid visual field defects caused by sunlight in an HUD structure which has a small volume while reducing the height of an overall structure. Another aspect of the specification is to avoid thermal damage to a display and driver's glare caused by back-reflected light by defocusing the back-reflection of sunlight. Another aspect of the specification is to provide a customized design of a vehicle imaging device according to a limited space inside the vehicle based on avoidance of visual field defects caused by sunlight.

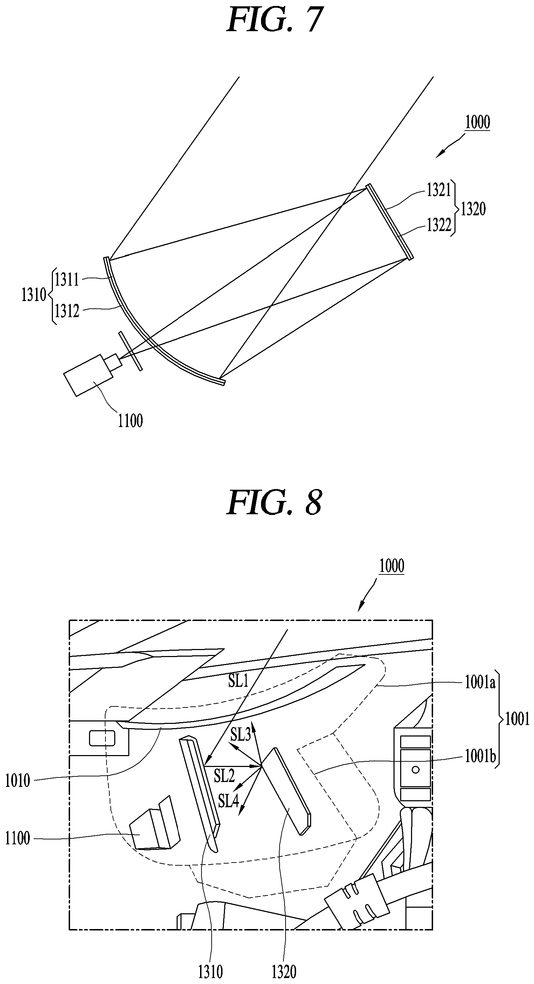

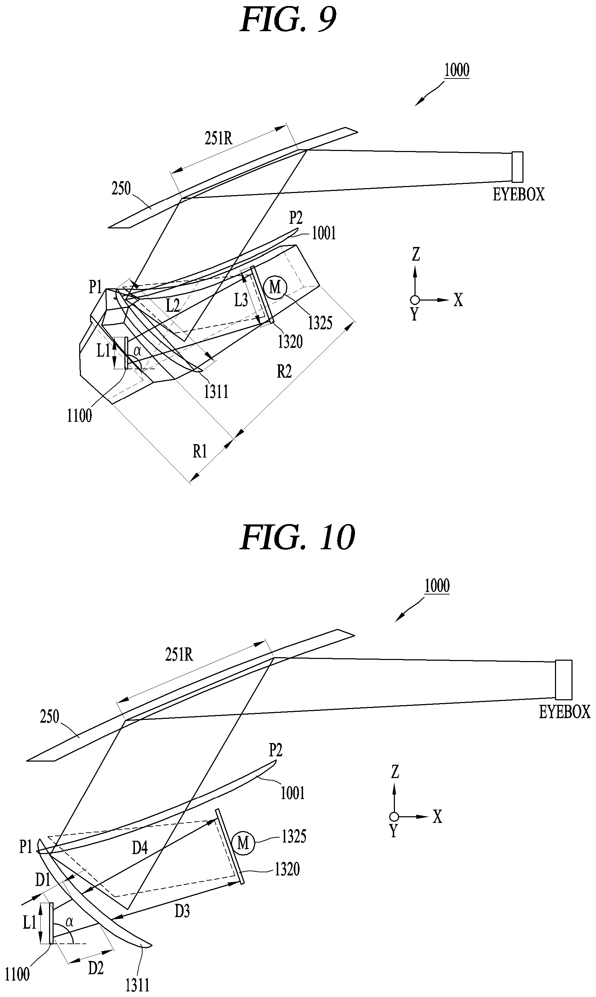

In this regard, FIG. 7 is a view of a vehicle imaging device according to an embodiment. FIG. 8 is a view of a structure of defusing sunlight incident on a diffuser screen of the vehicle imaging device of FIG. 7. FIG. 9 is a view of a structure in which an optical signal is reflected and transmitted through a specific region of a windshield in the vehicle imaging device of FIG. 7. FIG. 10 is a view of the shortest and longest distances of optical paths between different arrangement structures in the structure in which optical signals are transmitted in FIG. 9.

Referring to FIGS. 7 to 10, a picture generation unit (PGU) 1100 of the vehicle imaging device 1000 may be configured as projectors. A linear polarizer or linear polarizing film may be arranged at a front end of the PGU 1100. A concave mirror 1311 of the PGU 1100 may be an optical component that indicates a virtual image distance and magnification of the HUD.

A mirror 1310 may be implemented so that a polarizing film 1312, such as a reflective linear polarizing film, is arranged on the concave mirror 1311, to be utilized as a polarizing element for selective transmission and reflection.

A diffuser region 1320 may be implemented as a device, such as a diffuser screen, which displays projected images. The diffuser region 1320 may include any pattern or material that diffuses light. The diffuser region 1320 may have a phase retarder 1322 arranged at a front end thereof to retard the polarization of light so that the light is reflected from the concave mirror 1311. In case that a back-reflection phenomenon of sunlight occurs from a screen display device, the diffuser region 1320, such as a diffuser screen or diffuser film, may be applied in front of the screen display device.

A cover 1010 be implemented to suppress an introduction of foreign substances and to allow even a driver wearing sunglasses to view a screen by applying a polarizing film. The cover 1010 may be referred to as a dust cover. The cover 1010 may be designed to have a certain curved shape and curvature to block a path along which external sunlight is directly reflected to the driver.

A windshield 250 may be arranged in a front visible region of the vehicle by being coupled to a frame of the vehicle to protect the driver from an external environment and secure visibility. The windshield 250 may reflect an optical path from the HUD into an eyebox region, so that the driver may view virtual images. The virtual image may be an image which provides the driver with situational information as well as instrument cluster information, and a virtual image distance and FOV may change depending on requirements.

The eyebox may correspond to a region in which a visual field relocation is shown. In some embodiments, a motor 1325 may be operably coupled to the diffuser region 1320 to adjust a driver's field of view (FOV) height (Short/Nominal/Tall) by adjusting an angle of the diffuser region 1320.

Hereinafter, a vehicle imaging device 1000 configured to avoid sunlight according to the specification will be described in detail with reference to the drawings. Referring to FIGS. 7 to 10, a vehicle imaging device 1000 may be configured to include a cover 1010, a picture generation unit (PGU) 1100, a mirror 1310, and a diffuser region 1320. The cover 1010 may form the appearance of a dashboard 1001 of the vehicle. The PGU 1100, the concave mirror 1311, and the diffuser region 1320 may be arranged inside the cover 1010.

The mirror 1310 may include a concave mirror 1311 and a polarizing film 1312. The concave mirror 1311 may be arranged in the dashboard 1001 of the vehicle. The concave mirror 1311 may be formed to reflect an optical signal inside the dashboard 1001. The polarizing film 1312 may be arranged on at least one surface of the concave mirror 1311. The polarizing film 1312 may be a linear polarizing film that transmits at least one of S-polarization or P-polarization and reflects the other.

The PGU 1100 may be arranged inside the dashboard 1001. The PGU 1100 may be arranged to generate an optical signal to one side. The PGU 1100 may include various projectors and a display which displays pixels on a screen. The PGU 1100 may be implemented as a liquid crystal display (LCD), an organic light-emitting diode (OLED), a digital light processing (DLP), a liquid crystal on silicon (LCoS), or a micro light-emitting diode (micro-LED).

The concave mirror 1311 may be arranged apart from the PGU 1100 to transmit an optical signal from the PGU 1100. The polarizing film 1312 may be arranged on at least one surface of the concave mirror 1311. The polarizing film 1312 may be formed to selectively transmit or reflect an optical signal depending on a polarization component of the optical signal.

The diffuser region 1320 may be arranged apart from the concave mirror 1311 to display an image of an optical signal which is transmitted through the concave mirror 1311. The diffuser region 1320 may have a surface formed so that sunlight inside the dashboard 1001 is diffused. The diffuser region 1320 may have a surface formed so that sunlight entering the dashboard 1001 is reflected in various directions and absorbed inside the dashboard 1001.

In some embodiments, sunlight passing through the cover 1010 may be reflected from the concave mirror 1311 and diffused in the diffuser region 1320. In this regard, sunlight incident on the diffuser region 1320 may be reflected in various directions and absorbed into an inner region of the cover 1010.

In this regard, sunlight SL1 passing through the cover 10001 may be reflected from the mirror 1310, which includes the concave mirror 1311 and the polarizing film 1312, and sunlight SL2 reflected from the mirror 1310 may proceed to the diffuser region 1320. Sunlight SL3 which is reflected from the diffuser region 1320 and proceeds toward the cover 1001 may be absorbed into a second surface (rear surface) of the cover 1001. Sunlight SL4 which is reflected from the diffuser region 1320 and proceeds toward the mirror 1320 may be reflected from the mirror 1320 and absorbed in a lower region of the dashboard 1001.

The diffuser region 1320 may have a diffusing pattern formed on a screen so that sunlight is reflected in various directions. In another example, the diffuser region 1320 may be formed by laminating a diffusing film to allow sunlight to be reflected from the mirror in various directions.

The dashboard 1001 may include a first region 1001a where the cover 1010 is formed, and a second region 1001b where the PGU 1100 is arranged. The sunlight SL3 that has been reflected from the diffuser region 1320 to proceed toward the first region 1001a of the dashboard 1001 may be absorbed into the cover 1010 formed in the first region 1001a of the dashboard 1001. The sunlight SL4 that has been reflected from the diffuser region 1320 to proceed toward the second region 1001b of the dashboard 1001 may be absorbed into the second region 1001b of the dashboard 1001.

A first absorbing film which absorbs sunlight may be attached to a second surface of the cover 1010 formed in the first region 1001a of the dashboard 1001. A second absorbing film which absorbs sunlight may be attached to the second region 1001b of the dashboard 1001. The first absorbing film may be formed to absorb sunlight SL3 and transmit optical signals therethrough.

The cover 1010 may form the appearance (the front surface) of the dashboard 1001. The cover 1010 may be formed to allow optical signals reflected from the diffuser region 1320 and the concave mirror 1311 to pass therethrough. Sunlight passing through a first surface S1 of the cover 1010 may be reflected from the concave mirror 1311 and incident on the diffuser region 1320. Sunlight incident on the diffuser region 1320 may be reflected in various directions and absorbed into a second surface S2 of the cover 1010.

In some embodiments, the vehicle imaging device 1000 according to the specification may be configured to further include a phase retarder 1322. In this regard, the diffuser region 1320 may be configured to include a screen 1321 and a phase retarder 1322. In a structure in which a diffusing film is laminated in the diffuser region 1320, the screen 1321 may be replaced with a mirror.

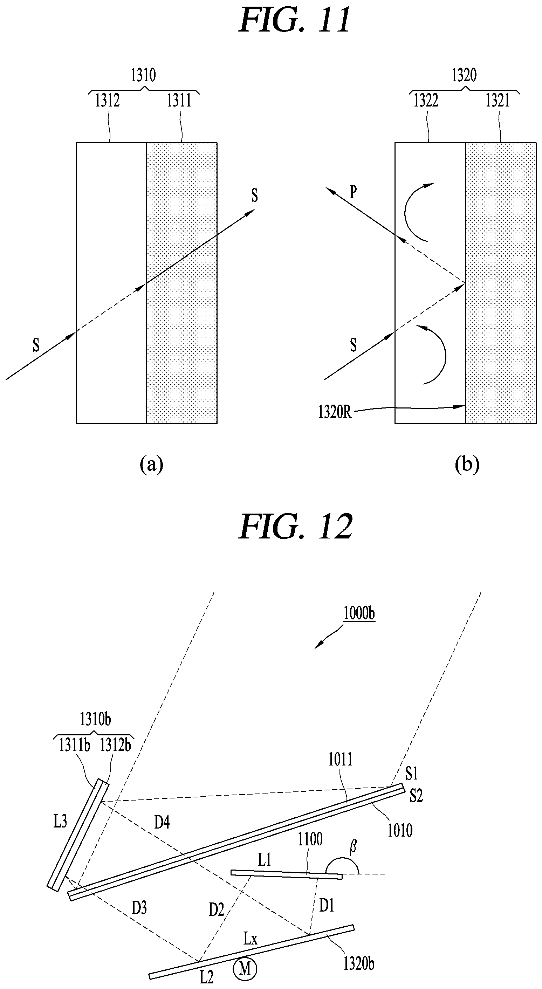

The phase retarder 1322 may be arranged on a front surface or a rear surface of the diffuser region 1320. The phase retarder 1322 formed on the screen 1321 may be configured to retard a phase of a polarization component of an optical signal. In this regard, FIG. 11 is a view of polarization components in a polarizing film attached to a concave mirror of FIG. 7 and a phase retarder attached to a screen in a diffuser region.

Referring to FIGS. 7 to 11, a first polarization component emitted from the PGU 1100 may be transmitted through the polarizing film 1312. The first polarization component transmitted through the polarizing film 1312 may be converted into a second polarization component in the phase retarder 1322 and the screen 1321. The phase retarder 1322 may be implemented as a quarter-wave plate (QWP) which converts the first polarization component (e.g. P-polarization) into a first circular polarization component (e.g., left-circular polarization). The first circular polarization component may be reflected from a reflective surface 1320R of the screen 1321 and converted into a second circular polarization component (e.g., right-circular polarization). The reflected second circular polarization component may be converted back into the second polarization component (e.g., P-polarization) while passing through the phase retarder 1322. The second polarization component (e.g., P-polarization) transmitted through the phase retarder 1322 of the diffuser region 1320 may be reflected from the concave mirror 1311 to proceed toward the windshield 250.

In this regard, the concave mirror 1311 to which the polarizing film 1312 is attached may be configured to transmit optical signals formed in the PGU 1100. An optical signal reflected through the phase retarder 1322 and the screen 1321 of the diffuser region 1320 may be reflected from the concave mirror 1321 and steered toward a specific region 251R of the windshield 250 of the vehicle.

In some embodiments, each component of the vehicle imaging device 1000 according to the specification may be arranged to have a certain inclination angle and length so as to optimally transmit/reflect optical signals and avoid sunlight. In this regard, the PGU 1110 may be arranged at an inclination angle α which is smaller than 90 degrees with respect to a horizontal plane. The PGU 1110 may be formed with a first length L1 on a plane corresponding to the inclination angle α. The concave mirror 1311 may be arranged at a first inclination angle which is greater than 90 degrees with respect to the horizontal plane. The concave mirror 1311 may be formed with a second length L2 on a plane corresponding to the first inclination angle. The second length L2 of the concave mirror 1311 may be greater than the first length L1.

The diffusion region 1320 may be arranged at a second inclination angle which is greater than 90 degrees with respect to the horizontal plane. The diffusion region 1320 may be formed with a third length L3 on a plane corresponding to the second inclination angle. The second inclination angle of the diffuser region 1320 may be formed to be greater than the inclination angle α of the PGU 1100 and smaller than the first inclination angle of the concave mirror 1311. Accordingly, a collection region of optical signals reflected from the concave mirror 1311 may be greater than a collection region of optical signals reflected from the diffusion region 1320, thereby increasing the size of an image displayed in the specific region 251R of the windshield 250.

The third length L3 of the diffuser region 1320 may be formed to be greater than the first length L1 of the PGU 1110 and smaller than the second length L2 of the concave mirror 1311. Accordingly, a collection region of optical signals reflected from the concave mirror 1311 may be greater than a collection region of optical signals reflected from the diffusion region 1320, thereby increasing the size of an image displayed in the specific region 251R of the windshield 250.

In some embodiments, the vehicle imaging device 1000 according to the specification may be configured to further include a motor 1325. In this regard, the motor 1325 may be coupled to the rear surface of the diffuser region 1320. The motor 1325 may be configured to adjust the second inclination angle of the diffusion region 1320. The motor 1325 may adjust the second inclination angle of the diffuser region 1320 to adjust the collection region of optical signals reflected from the concave mirror 1311. Accordingly, the motor 1325 may adjust a vertical position of the specific region 251R of the windshield 250 and a position of the eyebox. The motor 1325 may adjust the second inclination angle of the diffuser region 1320 to adjust a direction in which sunlight incident on the diffuser region 1320 is reflected.

Hereinafter, the arrangement structure of the cover 1010, the PGU 1100, the concave mirror 1311, and the diffuser region 1320 in the vehicle imaging device 1000 according to the specification will be described in detail. The cover 1010 may be arranged between a first point P1 and a second point P2 on the front surface of the dashboard 1001. The PGU 1100 may be arranged in a first region R1 of the dashboard 1001 where the cover 1010 is not arranged. The first region R1 of the dashboard 1001 may be a reception region received in the vehicle. A second region R2 of the dashboard 1001 may be a region where the cover 1010 is arranged on a front surface thereof and which is exposed to the outside of the vehicle.

The concave mirror 1311 may be arranged adjacent to the first point P1 of the cover 1010. The diffuser region 1320 may be arranged spaced apart by a certain distance from the second point P2 of the cover 1010 toward the inside of the dashboard 1001.

The PGU 1100 and the concave mirror 1311 may be arranged apart from each other by a first distance D1, which is the shortest distance of an optical path, and a second distance D2, which is the longest distance of an optical path. The concave mirror 1311 and the diffuser region 1320 may be arranged apart from each other by a third distance D3, which is the shortest distance of an optical path, and a fourth distance D4, which is the longest distance of an optical path. In this regard, distance values may increase in the order of the first distance D1 between the PGU 1100 and the concave mirror 1321, the second distance D2, the third distance D3 between the concave mirror 1311 and the diffuser region 1320, and the fourth distance D4. An optical signal emitted from a limited region of the PGU 1100 may increase a collection region of optical signals by using the inner region of the dashboard 1001 as much as possible. Accordingly, the size of an image displayed in the specific region 251R of the windshield 250 may increase.

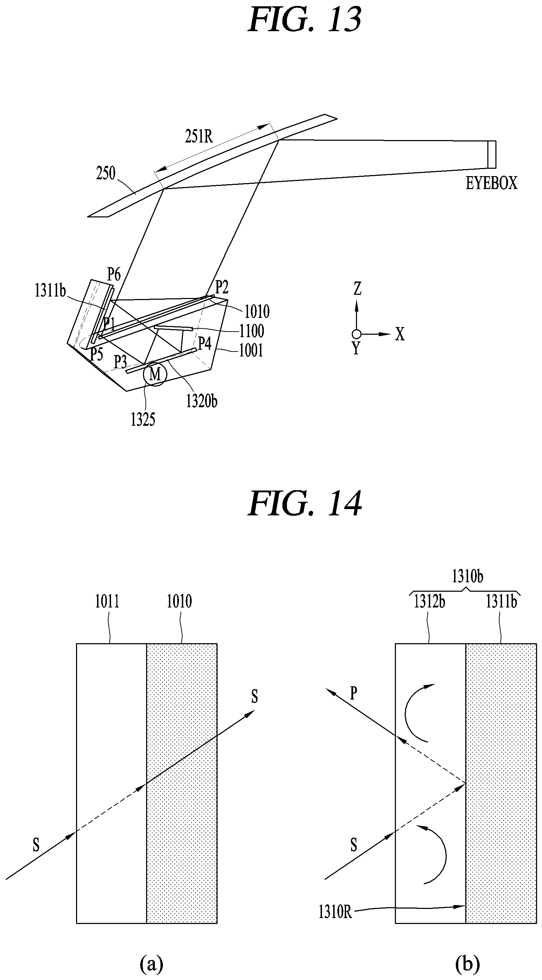

In some embodiments, a vehicle imaging device according to another embodiment will be described. In this regard, FIG. 12 is a view of a vehicle imaging device according to another embodiment. FIG. 13 is a view of a structure in which an optical signal is reflected and transmitted through a specific region of a windshield in the vehicle imaging device of FIG. 12.

Referring to FIGS. 12 to 13, a PGU 1100 of the vehicle imaging device 1000b may include projectors. A linear polarizing film may be arranged at a front end of the PGU 1100 to project the polarization of transmitted light as a linear polarization component.

A diffuser region 1320b may be a device which displays an image by receiving projected transmitted light. The shape of a concave mirror 1311b may be determined according to a virtual image distance and magnification. The concave mirror 1311b may have a shape exposed through a front end of a mirror bench. A phase retarder 13112b, such as a phase retardation film, may be arranged on a front end of the concave mirror 1311b, to phase-retard a projected linear polarization component to be reflected from the cover 1010.

The cover 1010 may include a polarizing film 1011 that suppresses an introduction of foreign substances, and reflect the linear polarization of light reflected from the concave mirror 1311b. An angle at which the cover 1010 is arranged may be adjusted to suppress sunlight from entering the eyebox region according to an angle of the windshield 250 and a location of the eyebox.

A windshield 250 may be arranged in a front visible region of the vehicle by being coupled to a frame of the vehicle to protect the driver from an external environment and secure visibility. The windshield 250 may reflect an optical path from the HUD into the eyebox, so that the driver may view virtual images. The virtual image may be an image that provides the driver with situational information as well as instrument cluster information, and a virtual image distance and FOV may change depending on requirements.

The eyebox may correspond to a region in which a visual field relocation is shown. In some embodiments, a motor 1325 may be operably coupled to the diffuser region 1320 to adjust a driver's field of view (FOV) height (Short/Nominal/Tall) by adjusting an angle of the diffuser region 1320.

Hereinafter, a vehicle imaging device 1000b according to the specification will be described with reference to FIGS. 12 and 13. The vehicle imaging device 1000b may be configured to include a cover 1010, a PGU 1100, a mirror 1310b, and a diffuser region 1320b.

The cover 1010 may form the appearance of a dashboard 1001 of the vehicle. The PGU 1100, the concave mirror 1311b, and the diffuser region 1320b may be arranged inside the cover 1010.

The PGU 1100 may be arranged inside the dashboard 1001. The PGU 1100 may be arranged to generate an optical signal to one side. The PGU 1100 includes various projectors and a display which displays pixels on a screen. The PGU 1100b may be implemented as LCD, OLED, DLP, LCoS, or micro-LED.

The diffuser region 1320b may be arranged apart from the concave mirror 1311b to display an image of an optical signal which is transmitted through the concave mirror 1311b. The diffuser region 1320b may have a surface formed so that sunlight inside the dashboard 1001 is diffused. The diffuser region 1320b may have a surface formed so that sunlight entering the dashboard 1001 is reflected in various directions and absorbed inside the dashboard 1001.

Sunlight passing through the cover 1010 may be diffused in the diffuser region 1320b. In this regard, sunlight incident on the diffuser region 1320b may be reflected in various directions and absorbed into an inner region of the cover 1010. The diffuser region 1320b may have a diffusing pattern formed on a screen so that sunlight is reflected in various directions. In another example, the diffuser region 1320b may be formed by laminating a diffusing film to allow sunlight to be reflected from the mirror in various directions.

The cover 1010 may form the appearance (front surface) of the dashboard 1001. The cover 1010 may be formed to allow optical signals reflected from the diffuser region 1320 to pass therethrough. Sunlight passing through a first surface S1 of the cover 1010 may be incident on the diffuser region 1320b. Sunlight which has been reflected from the concave mirror 1311 and passed through the first surface S1 of the cover 1010 may be incident on the diffuser region 1320b. Sunlight incident on the diffuser region 1320b may be reflected in various directions and absorbed into a second surface S2 of the cover 1010.

A polarizing film 1011 may be arranged on at least one surface of the cover 1010. The polarizing film 1011 may be formed to selectively transmit or reflect an optical signal depending on a polarization component of the optical signal which has been emitted from the PGU 1100 and reflected from the diffuser region 1320b.

The mirror 1310b may include a concave mirror 1311b and a phase retarder 1312b. The concave mirror 1311b may be arranged above the cover 1010. The concave mirror 1311b may be configured to reflect an optical signal which has passed through a first surface S1 and a second surface S2 of the cover 1010. The optical signal reflected from the concave mirror 1311b may be reflected from the first surface S1 of the cover 1010 and steered to a specific region 251R of the windshield 250 of the vehicle.

In some embodiments, the vehicle imaging device 1000 according to the specification may be configured to further include a phase retarder 1312b. The phase retarder 1312b may be arranged on a front surface of the concave mirror 1311b to retard a phase of a polarization component of an optical signal. In a structure in which a diffusing film is laminated in the diffuser region 1320b, a screen may be replaced with a mirror. The phase retarder 1312b arranged on the concave mirror 1311b may be configured to retard a phase of a polarization component of an optical signal.

In some embodiments, the vehicle imaging device according to the specification may enable selective transmission and reflection through polarization conversion. In this regard, FIG. 14 is a view of polarization components in a polarizing film attached to a cover of FIG. 12 and a phase retarder attached to a concave mirror.

An optical signal emitted from the PGU 1100 may be reflected from a screen or mirror of the diffuser region 1320b. An optical signal of a first polarization component reflected from the diffuser region 1320b may be transmitted through the polarizing film 1011 arranged on the cover 1010. The polarizing film 1011 may be configured to transmit the first polarization component and reflect a second polarization component.

The first polarization component transmitted through the polarizing film 1011 of the cover 1010 may be converted into the second polarization component in the phase retarder 1312b and the concave mirror 1311b. The phase retarder 1312b may be implemented as a quarter-wave plate (QWP) which converts the first polarization component (e.g. S-polarization) into a first circular polarization component (e.g., left-circular polarization). The first circular polarization component may be reflected from a reflective surface 1310R of the concave mirror 1311b and converted into a second circular polarization component (e.g., right-circular polarization). The reflected second circular polarization component may be converted back into the second polarization component (e.g., P-polarization) while passing through the phase retarder 1312b. The second polarization component (e.g., P-polarization) transmitted through the phase retarder 1312b of the mirror 1310b may be reflected from the polarizing film 1011 of the cover 1010 to be steered toward the windshield 250.

Accordingly, the cover 1010 to which the polarizing film 1011 is attached may transmit the optical signal of the first polarization component which is generated in the PGU 1100 and reflected from the diffuser region 1320b. In some embodiments, the optical signal of the second polarization component reflected through the phase retarder 1312b and the concave mirror 1311b may be reflected from the polarizing film 1011 arranged on the first surface S1 of the cover 1010.

In some embodiments, each component of the vehicle imaging device 1000b according to the specification may be arranged to have a certain inclination angle and length so as to optimally transmit/reflect optical signals and avoid sunlight. In this regard, the PGU 1110 may be arranged at an inclination angle β which is greater than 90 degrees with respect to a horizontal plane. The PGU 1110 may be formed with a first length L1 on a plane corresponding to the inclination angle β. The diffusion region 1320b may be arranged at a first inclination angle which is smaller than 90 degrees with respect to the horizontal plane. The diffusion region 1320b may be formed with a second length L2 on a plane corresponding to the first inclination angle. The second length L2 of the diffusion region 1320b may be greater than the first length L1.

The concave mirror 1311b may be arranged at a second inclination angle that is smaller than 90 degrees with respect to the horizontal plane. The concave mirror 1311b may be formed with a third length L3 on a plane corresponding to the second inclination angle. The second inclination angle of the concave mirror 1311b may be formed to be smaller than the inclination angle β of the PGU 1100 and greater than the first inclination angle of the diffusion region 1320b. Accordingly, a collection region of optical signals reflected from the concave mirror 1311b may be greater than a collection region of optical signals reflected from the diffusion region 1320b, thereby increasing the size of an image displayed in the specific region 251R of the windshield 250.

A length Lx of the collection region of the diffuser region 1320b may be formed to be greater than the first length L1 of the PGU 1110 and smaller than the third length L3 of the concave mirror 1311b. Accordingly, a collection region of optical signals reflected from the concave mirror 1311b may be greater than a collection region of optical signals reflected from the diffusion region 1320b, thereby increasing the size of an image displayed in the specific region 251R of the windshield 250.

In this regard, the length Lx of the collection region of the diffuser region 1320b may be formed to be smaller than the second length L2. The diffuser region 1320b may reflect optical signals in a partial region having the length Lx and reflect sunlight in various directions in an entire region having the second length L2 greater than the length Lx, thereby avoiding the sunlight.

In some embodiments, the vehicle imaging device 1000 according to the specification may be configured to further include a motor 1325b. In this regard, the motor 1325b may be coupled to the rear surface of the diffuser region 1320b. The motor 1325b may be configured to adjust the first inclination angle of the diffusion region 1320b. The motor 1325b may adjust the first inclination angle of the diffuser region 1320b to adjust the collection region of optical signals incident on the concave mirror 1311b. Accordingly, the motor 1325b may adjust a vertical position of the specific region 251R of the windshield 250 and the position of the eyebox. The motor 1325b may adjust the first inclination angle of the diffuser region 1320 to adjust a direction in which sunlight incident on the diffuser region 1320b is reflected.

Hereinafter, the arrangement structure of the cover 1010, the PGU 1100, the concave mirror 1311b, and the diffuser region 1320b in the vehicle imaging device 1000b according to the specification will be described in detail. The cover 1010 may be arranged between a first point P1 and a second point P2 on the front surface of the dashboard 1001. The diffuser region 1320b may be arranged between a third point P3 and a fourth point P4 on the rear surface of the dashboard 1001. The concave mirror 1311b may be arranged between a fifth point P5 and a sixth point P6 in an upper region of the dashboard 1001. The fifth point P5 of the concave mirror 1311b may be located closer to the bottom of the windshield 250 than the first point P1 of the dashboard 1001. The sixth point P6 of the concave mirror 1311b may be arranged between the first point P1 and the second point P2 of the dashboard 1001.

The PGU 1100 may be arranged between the cover 1010 and the diffuser region 1320b inside the cover 1010. The PGU 1100 may be arranged at an inclination angle β greater than 90 degrees with respect to the horizontal plane, and the cover 1010, the concave mirror 1311b, and the diffuser region 1320b may all be arranged at inclination angles smaller than 90 degrees. Accordingly, the optical signal emitted from the PGU 1100 having a limited emission region may be reflected from the diffuser region 1320b, the concave mirror 1311b, and the cover 1010, thereby increasing the collection region.

The PGU 1100 and the diffuser region 1320b may be arranged apart from each other by a first distance D1, which is the shortest distance of an optical path, and a second distance D2, which is the longest distance of an optical path. The diffuser region 1320b and the concave mirror 1311b may be arranged apart from each other by a third distance D3, which is the shortest distance of an optical path, and a fourth distance D4, which is the longest distance of an optical path. In this regard, distance values may increase in the order of the first distance between the PGU 1100 and the diffuser region 1320b, the second distance, the third distance between the diffuser region 1320b and the concave mirror 1311b, and the fourth distance. This may increase the collection region of optical signals emitted from the limited region of the PGU 1100 by using the inner region and upper region of the dashboard 1001 as much as possible. Accordingly, the size of an image displayed in the specific region 251R of the windshield 250 may increase.

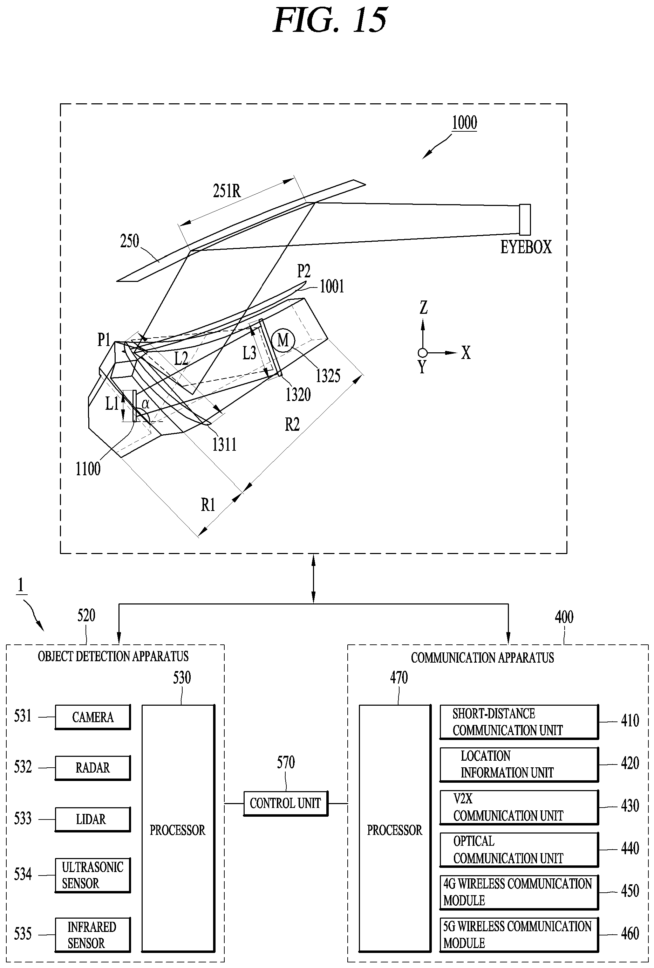

The foregoing description has been given of the vehicle imaging devices 1000 and 1000b according to one aspect of the present disclosure. Hereinafter, a vehicle including the vehicle imaging device 1000, 1000b according to another aspect of the specification will be described. All descriptions of the vehicle imaging devices 1000 and 1000b of FIGS. 6A to 14 described above and the vehicle 1 of FIGS. 1 to 5 may be applied to a vehicle including a vehicle imaging device 1000, 1000b below. In some embodiments, FIG. 15 is a block diagram of a vehicle having a vehicle imaging device according to the specification.

Hereinafter, a vehicle including a vehicle imaging device according to the disclosure will be described with reference to FIGS. 1 to 15. The vehicle 1 may include a windshield 250 and a vehicle imaging device 1000, 1000b. The windshield 250 may be arranged on a front surface of the vehicle 1. The vehicle imaging device 1000, 1000b may be arranged inside the dashboard 250 of the vehicle 1 and between the windshield 250 and the dashboard 1001.

The vehicle imaging device 1000 may be configured to include a cover 1010, a PGU 1100, a mirror 1310, and a diffuser region 1320. In this regard, the vehicle imaging device may be implemented as the vehicle imaging device 1000b of FIGS. 12 and 13. The vehicle imaging device 1000b may be configured to include a cover 1010, a PGU 1100, a mirror 1310b, and a diffuser region 1320b.

Hereinafter, for convenience of explanation, the vehicle imaging device 1000 including the cover 1010, the PGU 1100, the mirror 1310, and the diffuser region 1320 will be described. The cover 1010 may form the appearance of the dashboard 1001 of the vehicle. The PGU 1100, the concave mirror 1311, and the diffuser region 1320 may be arranged inside the cover 1010.

The mirror 1310 may include a concave mirror 1311 and a polarizing film 1312. The concave mirror 1311 may be arranged in the dashboard 1001 of the vehicle. The concave mirror 1311 may be formed to reflect an optical signal inside the dashboard 1001. The polarizing film 1312 may be arranged on at least one surface of the concave mirror 1311. The polarizing film 1312 may be a linear polarizing film which transmits at least one of S-polarization or P-polarization and reflects the other.

The PGU 1100 may be arranged inside the dashboard 1001. The PGU 1100 may be arranged to generate an optical signal to one side. The PGU 1100 may include various projectors and a display which displays pixels on a screen. The PGU 1100 may be implemented as a liquid crystal display (LCD), an organic light-emitting diode (OLED), a digital light processing (DLP), a liquid crystal on silicon (LCoS), or a micro light-emitting diode (micro-LED).

The concave mirror 1311 may be arranged apart from the PGU 1100 to transmit an optical signal from the PGU 1100. The polarizing film 1312 may be arranged on at least one surface of the concave mirror 1311. The polarizing film 1312 may be formed to selectively transmit or reflect an optical signal depending on a polarization component of the optical signal.

The diffuser region 1320 may be arranged apart from the concave mirror 1311 to display an image of an optical signal which is transmitted through the concave mirror 1311. The diffuser region 1320 may have a surface formed so that sunlight inside the dashboard 1001 is diffused. The diffuser region 1320 may have a surface formed so that sunlight entering the dashboard 1001 is reflected in various directions and absorbed inside the dashboard 1001.

In some embodiments, sunlight passing through the cover 1010 may be reflected from the concave mirror 1311 and diffused in the diffuser region 1320. In this regard, sunlight incident on the diffuser region 1320 may be reflected in various directions and absorbed into an inner region of the cover 1010.

In this regard, sunlight SL1 passing through the cover 10001 may be reflected from the mirror 1310, which includes the concave mirror 1311 and the polarizing film 1312, and sunlight SL2 reflected from the mirror 1310 may proceed to the diffuser region 1320. Sunlight SL3 which is reflected from the diffuser region 1320 and proceeds toward the cover 1001 may be absorbed into a second surface (rear surface) of the cover 1001. Sunlight SL4 which is reflected from the diffuser region 1320 and proceeds toward the mirror 1320 may be reflected from the mirror 1320 and absorbed in a lower region of the dashboard 1001.

The diffuser region 1320 may have a diffusing pattern formed on a screen so that sunlight is reflected in various directions. In another example, the diffuser region 1320 may be formed by laminating a diffusing film to allow sunlight to be reflected from the mirror in various directions.

The dashboard 1001 may include a first region 1001a where the cover 1010 is formed, and a second region 1001b where the PGU 1100 is arranged. The sunlight SL3 that has been reflected from the diffuser region 1320 to proceed toward the first region 1001a of the dashboard 1001 may be absorbed into the cover 1010 formed in the first region 1001a of the dashboard 1001. The sunlight SL4 that has been reflected from the diffuser region 1320 to proceed toward the second region 1001b of the dashboard 1001 may be absorbed into the second region 1001b of the dashboard 1001.

A first absorbing film which absorbs sunlight may be attached to a second surface of the cover 1010 formed in the first region 1001a of the dashboard 1001. A second absorbing film which absorbs sunlight may be attached to the second region 1001b of the dashboard 1001. The first absorbing film may be formed to absorb sunlight SL3 and transmit optical signals therethrough.

The cover 1010 may form the appearance (the front surface) of the dashboard 1001. The cover 1010 may be formed to allow optical signals reflected from the diffuser region 1320 and the concave mirror 1311 to pass therethrough. Sunlight passing through a first surface S1 of the cover 1010 may be reflected from the concave mirror 1311 and incident on the diffuser region 1320. Sunlight incident on the diffuser region 1320 may be reflected in various directions and absorbed into a second surface S2 of the cover 1010.

In some embodiments, the vehicle imaging device 1000 according to the specification may be configured to further include a phase retarder 1322. In this regard, the diffuser region 1320 may be configured to include a screen 1321 and a phase retarder 1322. In a structure in which a diffusing film is laminated in the diffuser region 1320, the screen 1321 may be replaced with a mirror.

So far, a vehicle imaging device which is capable of avoiding sunlight according to the specification and a vehicle including the same have been described. The technical features of the vehicle imaging device which is capable of avoiding sunlight according to the specification and the vehicle including the same will be summarized as follows, but are not limited thereto.

According to an embodiment, a vehicle imaging device that is designed to avoid sunlight in a driver's FOV region, and a vehicle including the same may be provided.

According to an embodiment, in an HUD structure in which the height of an entire structure is reduced while reducing a volume by arranging a polarizing film on a concave mirror and a phase retardation film on a diffuser screen, FOV defects due to sunlight may be avoided.

According to an embodiment, a volume reduction of a structure may be achieved by arranging a phase retardation film to allow selective transmission/reflection, and a diffuser screen may be applied to avoid defects due to sunlight.

According to an embodiment, thermal damage to a display and driver's glare caused by back-reflected light may be avoided by defocusing the back-reflection of sunlight.

According to an embodiment, a customized design of a vehicle imaging device may be allowed according to a limited space inside a vehicle by adjusting distance and angle between a concave mirror and a diffuser screen based on avoidance of visual field defects due to sunlight.

The disclosure may be implemented as computer-readable codes in a program-recorded medium. The computer readable medium includes all kinds of recording devices in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like. Also, the computer may include a processor or a controller. Therefore, the detailed description should not be limitedly construed in all of the aspects, and should be understood to be illustrative. The scope of the disclosure should be determined by reasonable interpretation of the appended claims and all changes that come within the equivalent scope of the disclosure are included in the scope of the disclosure.

## Claims

1. A vehicle imaging device comprising:
a picture generation unit (PGU) arranged inside a dashboard of a vehicle and configured to generate an optical signal to one side;
a concave mirror arranged spaced apart from the PGU to transmit the optical signal;
a polarizing film arranged on at least one surface of the concave mirror and configured to selectively transmit or reflect the optical signal according to a polarization component of the optical signal; and
a diffuser region arranged spaced apart from the concave mirror to display an image of the optical signal transmitted through the concave mirror, and having a surface formed thereon such that sunlight introduced into the dashboard is reflected in various directions and absorbed inside the dashboard; and
a cover forming appearance of the dashboard and configured to transmit the optical signal reflected from the diffuser region and the concave mirror.

2. The vehicle imaging device of claim 1, further comprising
a phase retarder arranged on a front surface of the diffuser region and configured to retard a phase of the polarization component of the optical signal.

3. The vehicle imaging device of claim 2, wherein
the concave mirror to which the polarizing film is attached transmits the optical signal generated in the PGU, and
an optical signal reflected through the phase retarder and a screen of the diffuser region is reflected from the concave mirror to be steered to a specific region of a windshield of the vehicle.

4. The vehicle imaging device of claim 1, wherein
the PGU is arranged at an inclination angle smaller than 90 degrees with respect to a horizontal plane, and
the concave mirror is arranged at a first inclination angle greater than 90 degrees with respect to the horizontal plane.

5. The vehicle imaging device of claim 4, wherein
the PGU is formed with a first length on a plane corresponding to the inclination angle,
the concave mirror is formed with a second length on a plane corresponding to the first inclination angle, and
the second length of the concave mirror is greater than the first length of the PGU.

6. The vehicle imaging device of claim 5, wherein
the diffuser region is arranged at a second inclination angle greater than 90 degrees with respect to the horizontal plane,
the diffuser region is formed with a third length on a plane corresponding to the second inclination angle,
the second inclination angle of the diffuser region is greater than the inclination angle of the PGU and smaller than the first inclination angle of the concave mirror, and
the third length of the diffuser region is greater than the first length of the PGU and smaller than the second length of the concave mirror.

7. The vehicle imaging device of claim 6, further comprising
a motor coupled to a rear surface of the diffuser region and configured to adjust the second inclination angle of the diffuser region.

8. The vehicle imaging device of claim 6, wherein
the cover is arranged between a first point and a second point on a front surface of the dashboard,
the PGU is arranged in a first region where the cover is not arranged, the concave mirror is arranged adjacent to the first point of the cover, and
the diffuser region is arranged spaced apart by a certain distance from the second point of the cover toward an inside of the dashboard.

9. The vehicle imaging device of claim 8, wherein
the PGU and the concave mirror are arranged spaced apart from each other by a first distance, which is a shortest distance of an optical path, and a second distance, which is a longest distance of an optical path, the concave mirror and the diffuser region are arranged spaced apart from each other by a third distance, which is a shortest distance of an optical path, and a fourth distance, which is a longest distance of an optical path, and
values increase in the order of the first distance, the second distance, the third distance, and the fourth distance.

10. A vehicle imaging device comprising:
a picture generation unit (PGU) arranged inside a dashboard of a vehicle and configured to generate an optical signal to one side;
a diffuser region arranged spaced apart from the concave mirror to display an image of the optical signal generated in the PGU, and having a surface formed thereon such that sunlight introduced into the dashboard is reflected in various directions and absorbed inside the dashboard;
a cover forming appearance of the dashboard and configured to transmit the optical signal reflected from the diffusion region;
a polarizing film arranged on at least one surface of the cover; and
a concave mirror arranged above the cover and configured to reflect an optical signal transmitted through first and second surfaces of the cover, wherein the optical signal reflected from the concave mirror is reflected from the first surface of the cover to be steered to a specific region of a windshield of the vehicle.

11. The vehicle imaging device of claim 10, further comprising
a phase retarder arranged on a front surface of the concave mirror and configured to retard a phase of a polarization component of the optical signal.

12. The vehicle imaging device of claim 11, wherein
the cover to which the polarizing film is attached transmits an optical signal of a first polarization component which is generated in the PGU and reflected from the diffuser region, and
an optical signal of a second polarization component reflected through the phase retarder and the concave mirror is reflected from the polarizing film arranged on the first surface of the cover.

13. The vehicle imaging device of claim 10, wherein
the PGU is arranged at an inclination angle greater than 90 degrees with respect to a horizontal plane, and
the diffuser region is arranged at a first inclination angle smaller than 90 degrees with respect to the horizontal plane.

14. The vehicle imaging device of claim 13, wherein
the PGU is formed with a first length on a plane corresponding to the inclination angle,
the diffuser region is formed with a second length on a plane corresponding to the first inclination angle, and
the second length of the diffuser region is greater than the first length of the PGU.

15. The vehicle imaging device of claim 14, wherein
the concave mirror is arranged at a second inclination angle smaller than 90 degrees with respect to the horizontal plane,
the concave mirror is formed with a third length on a plane corresponding to the second inclination angle, and
the second inclination angle of the concave mirror is smaller than the inclination angle of the PGU and greater than the first inclination angle of the diffuser region, and
a length of a collection region of the diffuser region is greater than the first length of the PGU and smaller than the third length of the concave mirror.

16. The vehicle imaging device of claim 15, further comprising
a motor coupled to a rear surface of the diffuser region and configured to adjust the first inclination angle of the diffuser region.

17. The vehicle imaging device of claim 15, wherein
the cover is arranged between a first point and a second point on a front surface of the dashboard,
the diffuser region is arranged between a third point and a fourth point on a rear surface of the dashboard,
the PGU is arranged between the cover and the diffuser region inside the cover,
the concave mirror is arranged between a fifth point and a sixth point in an upper region of the dashboard,
the fifth point of the concave mirror is arranged closer to a bottom of the windshield than the first point, and
the sixth point of the concave mirror is arranged between the first point and the second point.

18. The vehicle imaging device of claim 8, wherein
the PGU and the diffuser region are arranged spaced apart from each other by a first distance, which is a shortest distance of an optical path, and a second distance, which is a longest distance of an optical path, the diffuser region and the concave mirror are arranged spaced apart from each other by a third distance, which is a shortest distance of an optical path, and a fourth distance, which is a longest distance of an optical path, and
values increase in the order of the first distance, the second distance, the third distance, and the fourth distance.
